# EUROPEAN PATENT APPLICATION

(11) **EP 2 216 134 A1**
(43) Date of publication of application: **11.08.2010**
(21) Application number: 08851964.0
(22) Date of filing: 17.11.2008
(51) Int. Cl.: B24B 41/00, B23Q 1/00, B23Q 1/38, B23Q 1/42, B23Q 1/62, B23Q 11/12, B24B 47/10

(54) **GRINDING DEVICE**

(30) Priority: 20.11.2007 JP 2007300906
(71) Applicant: Bosch Corporation, Shibuya-ku Tokyo 150-8360 (JP)
(72) Inventor: NISHIZAWA, Taira, Higashi-Matsuyama-shi Saitama 355-8603 (JP); KUBOTA, Osamu, Higashi-Matsuyama-shi Saitama 355-8603 (JP); ANDO, Isao, Higashi-Matsuyama-shi Saitama 355-8603 (JP); UCHIDA, Mitsuru, Higashi-Matsuyama-shi Saitama 355-8603 (JP); YUI, Takayuki, Higashi-Matsuyama-shi Saitama 355-8603 (JP); SAMPEI, Michiya, Higashi-Matsuyama-shi Saitama 355-8603 (JP); NISHITOBA, Masayuki, Higashi-Matsuyama-shi Saitama 355-8603 (JP)
(74) Representative: Knapp, Thomas
(86) International application number: PCT/JP2008/070838
(87) International publication number: WO 2009/066628

(57) **Abstract**

To reduce the size of a device and improve machining precision.

A grinding device is equipped with a bed 1, a first slide portion 101 that is configured to be reciprocally movable on a straight line in a horizontal direction on the bed 1, a second slide portion 102 that is placed on this first slide portion 101 and is configured to be reciprocally movable on a straight line in a horizontal direction orthogonal to the direction in which the first slide portion 101 reciprocally moves, a workpiece holding portion 103 that is placed on this second slide portion 102 and holds and rotates a workpiece, and first to third grindstone spindles 21 to 23 that are fixedly disposed in appropriate positions on the bed 1 with respect to these first and second slide portions 101 and 102 and rotatably hold grindstones, wherein grinding is enabled by the moving of the workpiece by the first and second slide portions 101 and 102, and a step portion 1c side where the first to third grindstone spindles 21 to 23 are disposed is placed on a front side of the grinding device, whereby the size of the grinding device is reduced and workability is improved.

## Description

### Technical Field

The present invention pertains to a grinding device and particularly relates to a grinding device in which there is a reduction in size and an improvement in grinding precision.

### Background Art

Conventionally, as this type of device, there is, for example, known a device configured such that a workpiece spindle that holds and rotates a workpiece, such that the workpiece may be freely attached and detached, is disposed and such that a grindstone for machining is made reciprocally movable in the direction of the workpiece spindle and is made reciprocally movable in a diagonal direction at a predetermined angle with respect to the direction in which this grindstone for machining reciprocally moves, so that grinding of the inner surface of the workpiece can be performed (e.g., see patent document 1).

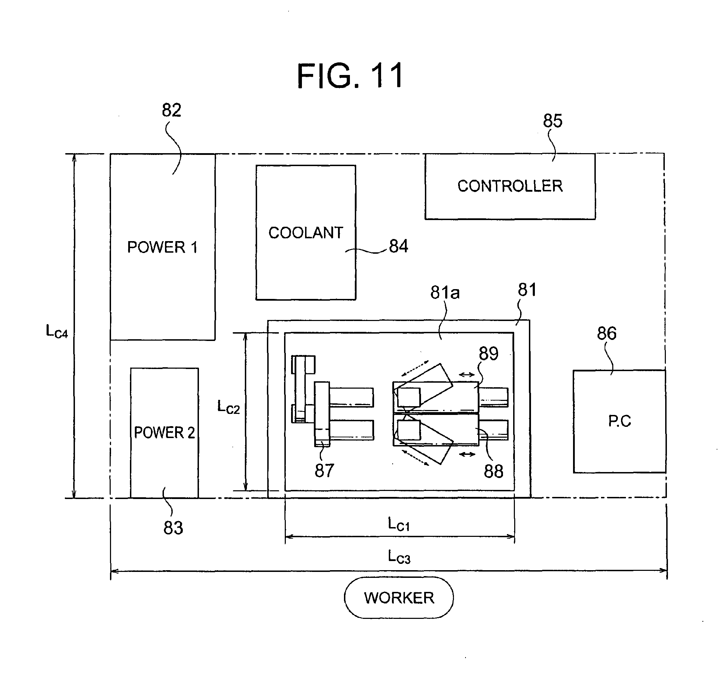

In FIG. 11, there is shown a plan diagram showing the general placement in a conventional grinding device suitable for inner surface grinding, and this conventional grinding device will be described below with reference to the same drawing.

This grinding device is one where first and second power source units (notated as "power 1" and "power 2" respectively in FIG. 11) 82 and 83, a coolant tank (notated as "coolant" in FIG. 11) 84, a controller (notated as "controller" in FIG. 11) 85 and an operation unit (notated as "P.C" in FIG. 11) 86 are disposed around a grinding machine 81.

The grinding machine 81 is, for example, from the standpoint of improving productivity while making good the coaxiality between a seat in the grinding of a valve seat or the like and a guide portion that guides a grindstone, configured to be disposed with an indexing device 87 that is made capable of indexing two workpieces, a seat grinding-use grindstone device 88 and a hole grinding-use grindstone device 89.

However, in this conventional device, in order to improve productivity, the indexing device is made capable of indexing two workpieces, so not only does the number of parts increase, but a high center height ends up becoming needed because the indexing device has a configuration that rotates for indexing.

Further, the seat grinding-use grindstone device 88 and the hole grinding-use grindstone device 89 both have configurations that enable movement of the grindstones in a transverse direction (the direction of the solid-line arrows in FIG. 11) with respect to the worker and also enable movement of the grindstones in a diagonal direction (the direction of the dotted-line arrows in FIG. 11) with respect to the worker, so a bed 81a on which these two devices 88 and 89 are installed becomes one where a certain amount of length is insured not only in the transverse direction with respect to the worker but also in a depth direction.

Because of this, the conventional grinding device is large overall, and further size reduction is desired.

For example, to give specific dimensions of each portion in the grinding device of the configuration shown in FIG. 11, the bed 81a has a width Lc1 of 1.88 m and a depth Lc2 of 1.28 m, and the grinding device overall has a width Lc3 of 4.6 m and a depth Lc4 of 2.8 m. Further, the center height of the workpiece spindle is 40 cm.

In this conventional device, it is common for the worker to go around to the back side of the grinding machine 81 and perform work when replacing a grindstone or a dresser, and there is the problem that work efficiency is poor.

Further, when this grinding device is plurally installed and machining of a workpiece is sequentially done by these plural grinding devices, it is common to place the grinding devices in the transverse direction (the direction represented by the width Lc3 in FIG. 11), but there is the problem that not only must a large floor space be ensured to install the plural grinding devices because the width Lc3 per one grinding device is long as described above, but when a single worker is in charge of the plural grinding devices, the moving distance of that worker becomes a magnitude that cannot be ignored from the point of workability and work efficiency.

Moreover, the conventional grinding device has the problem that it is difficult to suppress the affect of heat with respect to workpiece machining precision and dressing precision because the grinding machine is large and its center height is high as described previously.

Patent document 1: Japanese Patent Application Laid-open No. Hei 11-277383

### Disclosure of the Invention

### Problems to be Solved by the Invention

The present invention has been made in light of the above-described circumstances and provides a grinding device that is compact, has good operability, and in which the affect of heat with respect to workpiece machining precision and dressing precision is as small as possible.

### Means for Solving the Problems

According to an aspect of the present invention, there is provided a grinding device configured to be capable of grinding the inner diameter of a workpiece, grinding a seat and grinding an end surface, the grinding device comprising:
a mount portion that has a horizontal surface;
workpiece holding and rotating means that holds and rotates the workpiece such that the workpiece may be freely attached thereto and detached therefrom;
workpiece moving means that is disposed on the mount portion and holds the workpiece holding and rotating means such that the workpiece holding and rotating means may be freely moved; and
grindstone holding means that is fixedly disposed in an appropriate position on the mount portion with respect to the working moving means and rotatably holds a grindstone,
   wherein
the portion of the mount portion where the grindstone holding means is disposed is placed on a front side of the grinding device to enable work by a worker with respect to the workpiece and the grindstone, and
grinding of the workpiece by the grindstone held in the grindstone holding means is enabled by the moving of the workpiece by the workpiece moving means.

### Advantage of the Invention

According to the present invention, the grindstone is fixed, the workpiece is configured such that it may be freely moved with respect to the grindstone, and the portion where the grindstone is fixed is placed on the front side of the grinding device to enable work such as changing the workpiece and attaching and detaching the grindstone from this portion, whereby the invention achieves the effects that further size reduction as compared to a conventional device becomes possible and there can be provided a grinding device where workability is extremely good.

Further, because the grindstone is, unlike conventionally, fixed in one place and used, the affect of the heat source of the grindstone spindle motor on workpiece machining precision can be reduced as much as possible, and combined with the fact that the placement of each member on the mount portion is bilaterally symmetrical when seen from the portion where the grindstone is disposed, workpiece machining precision that is higher than conventionally can be ensured.

### Brief Description of Drawings

FIG. 1(A) and FIG. 1(B) are diagrams showing the overall configuration of a grinding device in an embodiment of the present invention, with FIG. 1(A) being a front diagram and FIG. 1(B) being a side diagram.
FIG. 2 is an overall perspective diagram showing a configuration example of main portions of the grinding device in the embodiment of the present invention.
FIG. 3 is a plan diagram of the main portions of the grinding device in the embodiment of the present invention shown in FIG. 2.
FIG. 4 is a longitudinal sectional diagram of a first slide portion that is used in the grinding device in the embodiment of the present invention.
FIG. 5 is a plan diagram of one configuration example of a hydrostatic pad that is used in the grinding device in the embodiment of the present invention.
FIG. 6(A) and FIG. 6(B) are diagrams showing the relationship between the cross-sectional structure of the hydrostatic pad shown in FIG. 5 and pressure inside a recess, with FIG. 6(A) being a cross-sectional diagram along line A-A of FIG. 5 and FIG. 6(B) being a characteristic line diagram showing a change in the pressure inside the recess with respect to the transverse direction of FIG. 6(A).
FIG. 7(A) and FIG. 7(B) are diagrams showing the relationship between the cross-sectional structure of the hydrostatic pad shown in FIG. 5 and pressure inside the recess, with FIG. 7(A) being a cross-sectional diagram along line B-B of FIG. 5 and FIG. 7(B) being a characteristic line diagram showing a change in the pressure inside the recess with respect to the transverse direction of FIG. 7(A).
FIG. 8 is an overall perspective diagram showing a piping configuration example of an oil path that is disposed in the slide portion that is used in the grinding device in the embodiment of the present invention.
FIG. 9(A) and FIG. 9(B) are diagrams showing a configuration example of a distribution plug that is disposed in the slide portion that is used in the grinding device in the embodiment of the present invention, with FIG. 9(A) being a front diagram and FIG. 9(B) being a longitudinal sectional diagram.
FIG. 10(A) and FIG. 10(B) are diagrams showing a configuration example of an orifice that is disposed in the slide portion that is used in the grinding device in the embodiment of the present invention, with FIG. 10(A) being a plan diagram and FIG. 10(B) being a longitudinal sectional diagram.
FIG. 11 is a plan diagram showing a placement configuration example of a conventional grinding device.

### Explanation of Codes

- 11: First Base Plate
- 12: First Table Plate
- 14: Second Base Plate
- 15: Second Table Plate
- 17: Chuck
- 24: First Grindstone
- 25: Second Grindstone
- 26: Third Grindstone
- 30: Guide Portion
- 31a: First Reference Guide Member
- 32a: First Movable Guide Member
- 40: Hydrostatic pad
- 101: First Slide Portion
- 102: Second Slide Portion
- 103: Workpiece Holding Portion

### Description of Specific Embodiment

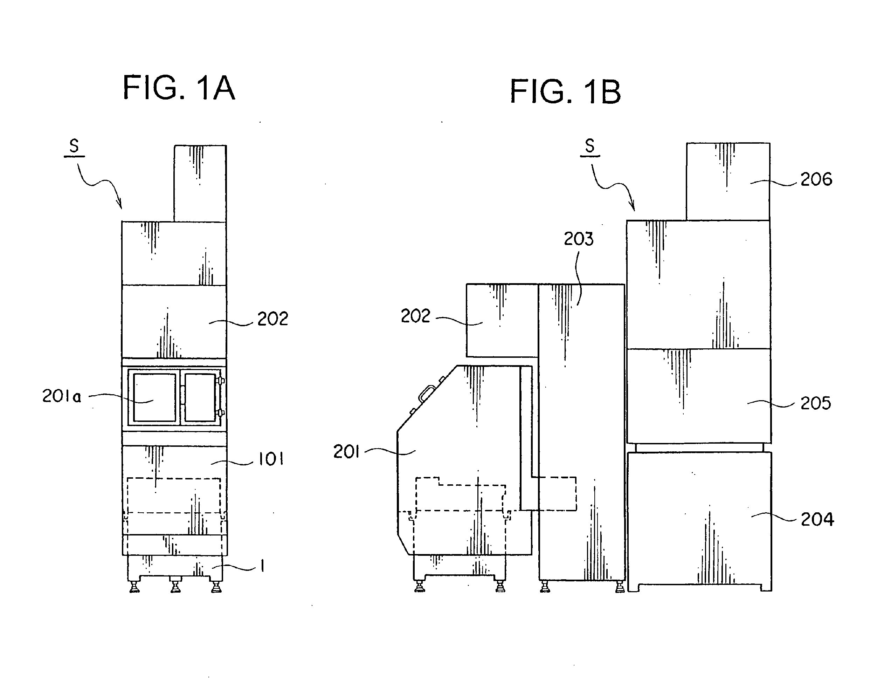

Hereinafter, embodiments of the present invention will be described with reference to FIG. 1 to FIG. 10.

It will be noted that members, placements and the like described below are not intended to limit the present invention and can be variously modified within the scope of the gist of the present invention.

First, the overall configuration of a grinding device in the embodiment of the present invention will be described with reference to FIG. 1.

A grinding device S in the embodiment of the present invention is particularly a device whose overall exterior and dimensions are extremely reduced as compared to those of a conventional device, and a width W of the front side of the grinding device S is 0.8 m, so that it has a slenderness of roughly about 1/3 the conventional width (see FIG. 1(A)). Further, a depth L of the grinding device S is 2 m and somewhat smaller than conventionally (see FIG. 1(B)). Because the width of the front of the grinding device S is miniaturized in this manner, the installation space of the grinding device S can be significantly reduced as compared to conventionally. What enables this size reduction is the structure of a workpiece grinding portion whose details will be described later.

The grinding device S of the present invention is broadly divided into and configured by a body section 201 in which grindstones that perform grinding of workpieces and the like are disposed, a console panel 202 that is disposed above the body section 201 and sets grinding amounts and the like, a control panel 203 in which an electronic circuit that performs control of grinding operation and the like on the basis of the setting data of the console panel 202 and the like is housed and which is disposed behind the console panel 202, a filtration device 204 that is disposed behind the control panel 203 and performs filtration of later-described hydrostatic-cum-cooling-use oil, a hydraulic device 205 that is disposed so as to be stacked on this filtration device 204 and controls the pressure of the hydrostatic-cum-cooling oil, and a mist collector 206 that is disposed so as to be stacked on this hydraulic device 205 and performs collection of the hydrostatic-cum-cooling oil that has been released in mist form for cooling.

On the upper portion of the front of the body section 201, a front door 201a is disposed such that it can be opened and closed, and work such as attaching a workpiece to or detaching a workpiece from a chuck (not shown) for workpiece holding disposed inside can be performed by opening and closing the front door 201a.

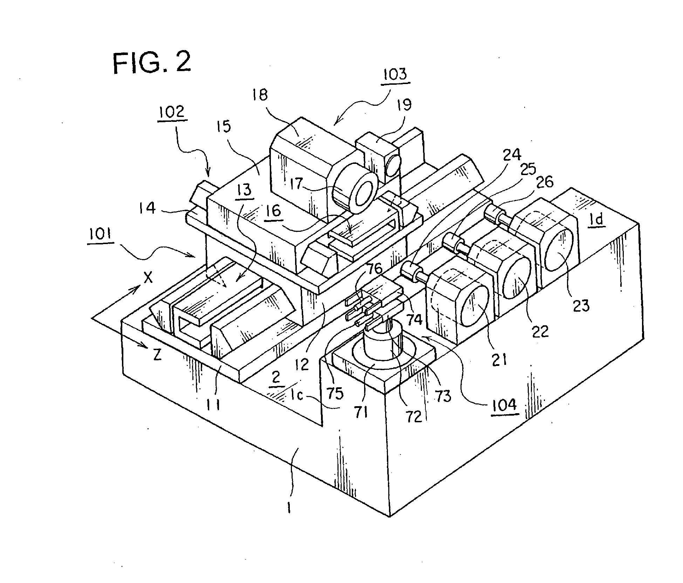

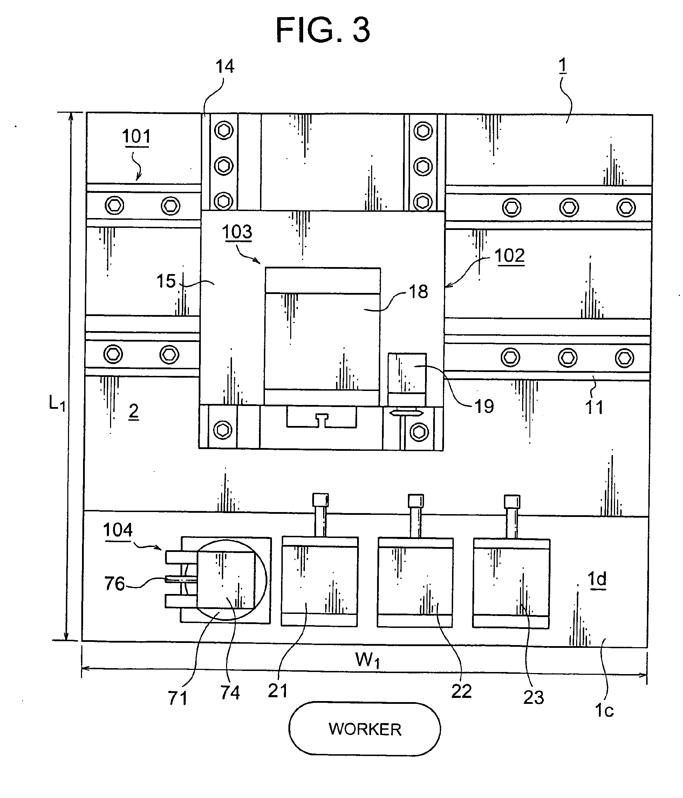

In FIG. 2 and FIG. 3, there is shown a configuration example of main portions of the grinding device S that are housed and disposed inside the body section 201, and this configuration example will be described below with reference to the same drawings.

On the bottom portion side of the body section 201, there is disposed a bed 1 that serves as a mount portion, and on a slide installation surface 2 that is a horizontal surface formed on this bed 1, there are disposed first and second slide portions 101 and 102 that serve as first and second slide means and a workpiece holding portion 103 that serves as workpiece holding and rotating means. It will be noted that it is preferable for the bed 1 to be formed using low thermal expansion cast metal from the standpoint of keeping thermal displacement to a minimum.

The planar exterior shape of the bed 1 in the embodiment of the present invention is, as shown in FIG. 3, a square whose length L1 and width W1 are equal, but a step portion 1c that is higher than the slide installation surface 2 is formed along one side of the bed 1, and first to third grindstone spindles 21 to 23 and the like are disposed on a top portion 1d of the step portion 1c (details will be described later). It will be noted that, in the embodiment of the present invention, the size of the bed 1 is extremely reduced as compared to conventionally, such that L1 = W1 = 0.7 m.

On the slide installation surface 2, there is disposed the first slide portion 101. This first slide portion 101 is broadly divided into and configured by a first base plate (base member) 11 that is fixedly disposed on so as to be joined to the slide installation surface 2, a first table plate (table member) 12 that is disposed so as to face this first base plate 11, and a linear motor 13 that is disposed between the first base plate 11 and the table plate 12. It will be noted that only the outline of the first slide portion 101 is shown in FIG. 2, and the more detailed structure of the slide portion 101 will be described later.

In the embodiment of the present invention, the overall exterior shape of the first base plate 11 is roughly rectangular, and the long sides of that rectangle are set to be substantially the same length as that of the one side of the bed 1 on the opposite side of the step portion 1c (see FIG. 2 and FIG. 3).

Further, the width of the first table plate 12 is substantially the same as the short sides of the first base plate 11, but the length of the sides of the first table plate 12 in the direction orthogonal to the short sides is roughly about 1/3 to 2/3 the long sides of the first base plate 11, and, as described later, it is ensured that reciprocal movement of the first table plate 12 along the long sides of the first base plate 11 becomes easy.

It will be noted that this first table plate 12 receives the driving force of the linear motor 13, is guided parallel to the long sides of the first base plate 11 by a later-described guide portion 30, and reciprocally moves.

Here, the direction in which the first table plate 12 reciprocally moves will appropriately be called the X-axis direction (see FIG. 2).

Additionally, on the first table plate 12, the second slide portion 102 is disposed such that it is placed thereon.

The basic structure of this second slide portion 102 is the same as that of the first slide portion 101; the second slide portion 102 is broadly divided into and configured by a second base plate (base plate member) 14, a second table plate (table member) 15 that is disposed so as to face this second base plate 14, and a linear motor 16 that is disposed between the second base plate 14 and the second table plate 15. It will be noted that, similar to the first slide portion 101, only the outline of the second slide portion 102 is shown in FIG. 2, and the more detailed structure of the second slide portion 102 will be described later.

The width-that is, the length in the X-axis direction-of the second base plate 14 in the embodiment of the present invention is set to be substantially equal to the length of the first table plate 12 in the X-axis direction, and the length of the second base plate 14 in the direction orthogonal to the X axis (hereinafter, this direction will appropriately be called the Z-axis direction) in a horizontal plane including the X axis is somewhat longer than the length of the first table plate 12 in the Z-axis direction.

The width-that is, the length in the X-axis direction-of the second table plate 15 is set to be substantially equal to the length of the second base plate 14 in the X-axis direction, and the length of the second table plate 15 in the Z-axis direction is set to be somewhat shorter than the length of the second base plate 14 in the Z-axis direction.

Additionally, the second table plate 15 receives the driving force of the linear motor 16 and is reciprocally moved in the Z-axis direction.

Moreover, the workpiece holding portion 103 is placed on the second table plate 15.

That is, the workpiece holding portion 103 is configured from a chuck 17 that detachably holds an unillustrated workpiece and a main shaft 18 that has a motor (not shown) inside and holds the chuck 17 such that the chuck 17 may freely rotate.

In the embodiment of the present embodiment, the main shaft 18 and the chuck 17 are fixed and disposed on the second table plate 15 such that the chuck 17 projects in the direction of the step portion 1c from the edge of the second table plate 15 positioned on the side of the step portion 1c formed on the bed 1.

Further, on the second table plate 15 in the vicinity of the workpiece holding portion 103, there is fixed and disposed a dressing spindle 19 so that dressing work of later-described first to third grindstones 24 to 26 can be performed.

On the top portion 1d of the step portion 1c, the first to third grindstone spindles 21 to 23 are fixed and disposed an appropriate interval apart from each other in the X-axis direction. A first grindstone 24, a second grindstone 25 and a third grindstone 26 are rotatably attached to these first to third grindstone spindles 21 to 23 respectively, and the first to third grindstone spindles 21 to 23 are fixedly disposed on the step portion 1c such that the first to third grindstones 24 to 26 face the workpiece holding portion 103. In other words, the first to third grindstone spindles 21 to 23 are disposed such that their axial directions coincide with the Z-axis direction (see FIG. 2).

In the embodiment of the present invention, the bed 1 is placed such that this step portion 1c side becomes positioned on the front side of the grinding device-that is, the front side of the body portion 201-such that a worker can perform work such as attaching and detaching workpieces and attaching and replacing the first to third grindstones 24 to 26 via the front door 201a (see FIG. 1 and FIG. 3).

Further, on the step portion 1c, a loading device 104 for changing workpieces is disposed in the vicinity of these first to third grindstone spindles 21 to 23.

The loading device 104 in the embodiment of the present invention has, as its main components, a revolving cylinder 71, an up-and-down cylinder 72 and two air chucks 73 and 74.

The revolving cylinder 71 disposed on the step portion 1c is configured to be rotatable in a horizontal plane, and the up-and-down cylinder 72 is placed on this revolving cylinder 71.

The up-and-down cylinder 72 is configured such that it can move up and down in the vertical direction, and the first and second air chucks 73 and 74 are disposed so as to be stacked on this up-and-down cylinder 72.

According to this configuration, loading and unloading work can be performed at an appropriate position with respect to the chuck 17 because of the revolution of the revolving cylinder 71 and the up-and-down movement of the up-and-down cylinder 72.

Further, in the embodiment of the present invention, a first gauge head 75 for seat depth measurement is attached at an appropriate position to the first air chuck 73, and a second gauge head 76 for inner diameter postproduction measurement is attached at an appropriate position to the second air chuck 74, and the gauge heads 75 and 76 are configured to be capable of measuring at the time of loading.

In this configuration, the work of grinding an unillustrated workpiece is done by first attaching the workpiece (not shown) to the chuck 17 and then performing setting corresponding to the desired grinding on the console panel 202. Then, when an unillustrated start switch is pressed, the first to third grindstones 24 to 26 are appropriately selected and grinding is performed while the first table plate 12 is reciprocally moved in the X-axis direction and the second table plate 15 is reciprocally moved in the Z-axis direction in accordance with the desired grinding by control from the control panel 203.

In the embodiment of the present invention, the first grindstone 24 is provided for inner diameter grinding, the second grindstone 25 is provided for seat grinding, and the third grindstone 26 is provided for end surface grinding.

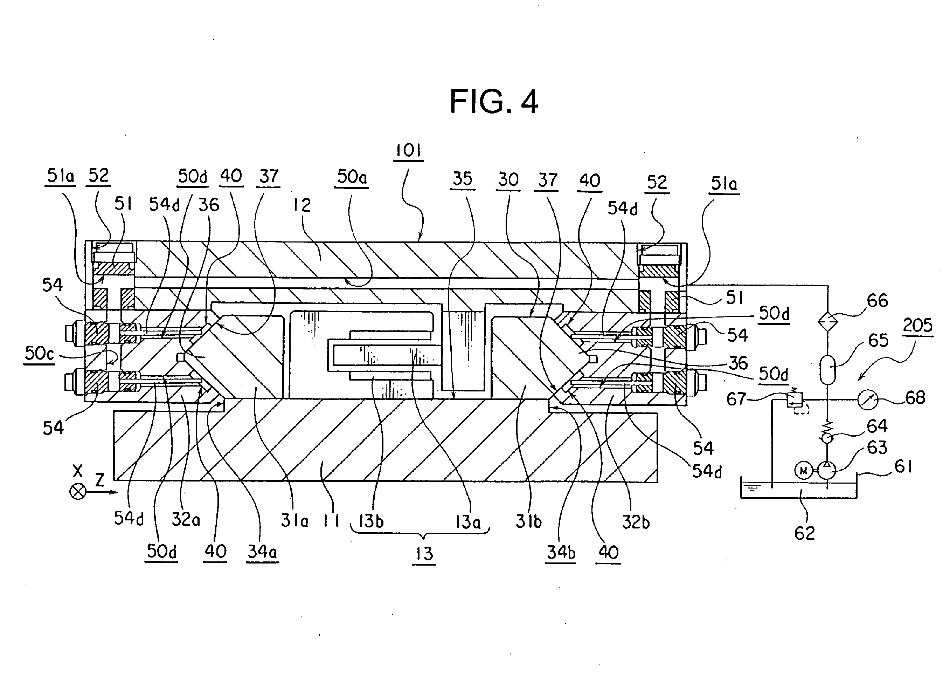

Next, the more specific configurations of the first and second slide portions 101 and 102 that serve as the first and second slide means configuring workpiece moving means will be described with reference to FIG. 4 to FIG. 10.

First, in FIG. 4, there is shown a longitudinal sectional diagram of the first slide portion 101 that serves as the first slide means; in the embodiment of the present invention, the configuration of the second slide portion 102 that serves as a hydrostatic slide device is basically the same as that of the first slide portion 101, so the description of the configuration of the first slide portion 101 below will substitute for the description of the configuration of the second slide portion 102.

In the embodiment of the present invention, between the first base plate 11 and the first table plate 12, there is disposed a guide portion 30 that guides the first table plate 12 in the X-axis direction (the direction orthogonal to the page in FIG. 4).

That is, the guide portion 30 in the embodiment of the present invention is broadly divided into and configured by first and second reference guide members 31a and 31b that are fixedly disposed on the first base plate 11, first and second movable guide members 32a and 32b that are fixedly disposed on the first table plate 12, and plural hydrostatic pads 40 that are disposed between these first and second reference guide members 31a and 31b and first and second movable guide members 32a and 32b.

The first and second reference guide members 31a and 31b are fixedly disposed on the first base plate 11 an appropriate interval apart from each other in the direction orthogonal to the direction in which the first table plate 12 reciprocally moves-that is, in other words, in the Z-axis direction.

In the embodiment of the present invention, the vicinities of both side portions of the first base plate 11 in the Z-axis direction are formed in flat step portions 34a and 34b, and the portion sandwiched between these flat step portions 34a and 34b is a flat portion 35 (see FIG. 4).

It is necessary for at least the flat portion 35 of the first base plate 11 to be a horizontal surface.

The first and second reference guide members 31a and 31b are fixedly disposed along both side edge portions of this flat portion 35-that is, along the side edge portions adjacent to the flat step portions 34a and 34b.

The first and second reference guide members 31a and 31b in the embodiment of the present invention comprise members formed in roughly prismatic column shapes, and portions on one surface thereof are chevron portions 36 formed in chevron shapes. Additionally, the first and second reference guide members 31a and 31b are fixedly disposed on the flat portion 35 such that the chevron portions 36 face outward in the direction orthogonal to the longitudinal direction of the first base plate 11-that is, in the Z-axis direction.

The first and second movable guide members 32a and 32b comprise, similar to the first and second reference guide members 31a and 31b, members formed in roughly prismatic column shapes, and portions on one side thereof have formed therein groove portions 37 into which the chevron portions 36 of the first and second reference guide members 31a and 31b can loosely fit.

Additionally, the first and second movable guide members 32a and 32b are fixedly disposed on both side edge portions in the X-axis direction of the undersurface side (the lower side of the page in FIG. 4) of the first table plate 12 such that the groove portions 37 face the inside of the first slide portion 101 in the Z-axis direction-in other words, such that the groove portions 37 face the chevron portions 36 of the first and second reference guide members 31a and 31b.

It will be noted that the first linear motor 13 has a publicly known/well-known configuration broadly divided into a first coil 13a and a first permanent magnet 13b, with the first coil 13a being fixedly attached to the undersurface side of the first table plate 12 and the first permanent magnet 13b being fixedly attached to the first base plate 11 between the first reference guide member 31a and the first movable guide member 32a on one side and the second reference guide member 31b and the first movable guide member 32b on the other side.

Moreover, in the embodiment of the present invention, the hydrostatic pads 40 are disposed on slanting surface portions of the groove portions 37 as described next.

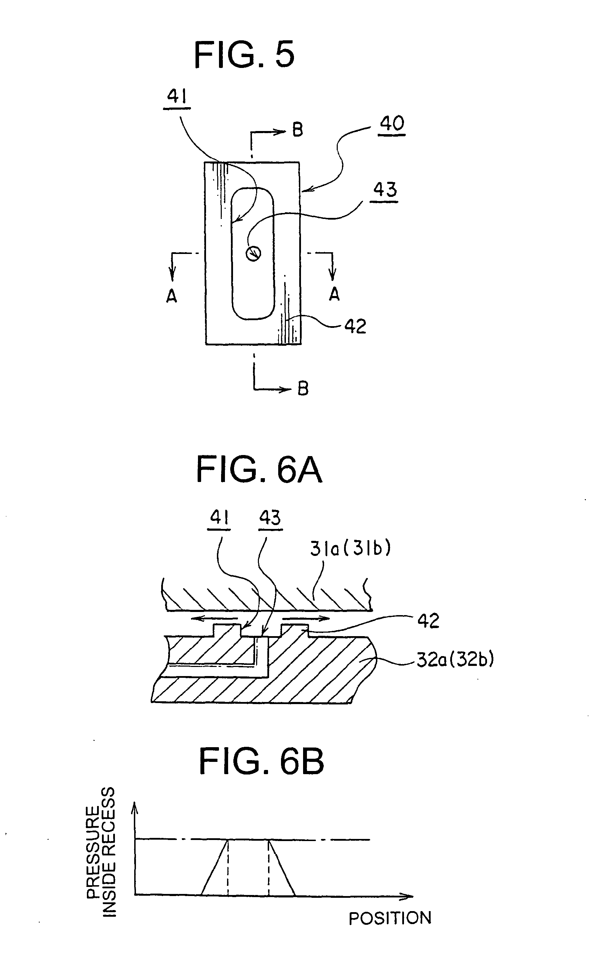

The hydrostatic pads 40 will be described below with reference to FIG. 5 to FIG. 8.

First, as the basic configuration of the hydrostatic pads 40, as shown in FIG. 5, each hydrostatic pad 40 comprises a recess 41 and a land 42 that is formed so as to surround the periphery of this recess 41 (see FIG. 5), and partner members in which hydrostatic pressure is to be created-that is, the first and second reference guide members 31a and 31b in the embodiment of the present invention-are positioned so as to face the lands 42 (see FIG. 6(A)).

Moreover, in the bottom portions of the recesses 41, there are formed openings 43 that are communicated with a later-described oil path 50, and by discharging oil at a predetermined pressure from the openings 43, hydrostatic pressure can be created between the first reference guide member 31a and the first movable guide member 32a and between the second reference guide member 31b and the second movable guide member 32b.

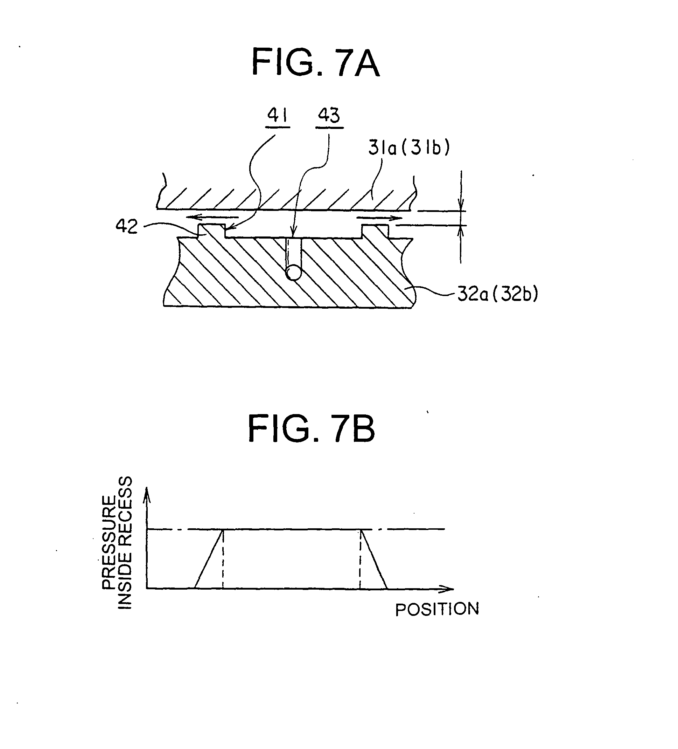

That is, as shown in FIG. 6(B) and FIG. 7(B), the spaces between the recesses 41 and the facing first and second reference guide members 31a and 31b are held at a constant pressure.

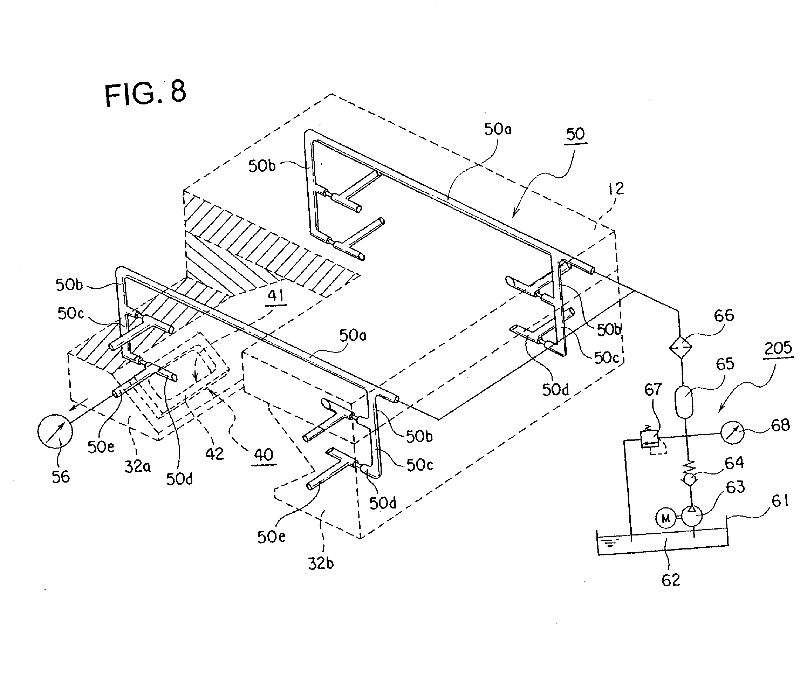

It will be noted that, in the embodiment of the present invention, the entire slanting surfaces of the groove portions 37 function as the lands 42, but the lands 42 may also be disposed so as to project from the slanting surfaces (see FIG. 8).

In this manner, by creating hydrostatic pressure between the first reference guide member 31a and the first movable guide member 32a and between the second reference guide member 31b and the second movable guide member 32b, hydrostatic bearings are realized, and both members become held in a state where they face each other via an interval.

It is preferable, from the standpoint of the static and dynamic balance and the operating precision of the first table plate 12, for the first reference guide member 31a and the first movable guide member 32a and for the second reference guide member 31b and the second movable guide member 32b to be placed symmetrically with respect to the center of the first slide portion 101 in the vertical direction.

Further, similarly, it is preferable for the hydrostatic pads 40 to also be placed symmetrically with respect to the center of the first slide portion 101. In this manner, when the pads 40 in the first reference guide member 31a and the first movable guide member 32a and the pads 40 in the second reference guide member 31b and the second movable guide member 32b are disposed symmetrically, the clearance between the first reference guide member 31a and the first movable guide member 32a (see FIG. 7(A)) and the clearance between the second reference guide member 31b and the second movable guide member 32b become substantially equal.

In the embodiment of the present invention, an oil path 50 is formed in the first table plate 12 and in the first and second movable guide members 32a and 32b in order to supply oil having a predetermined pressure to the hydrostatic pads 40.

That is, first, in the first table plate 12, communication-use oil paths 50a are formed inside the first table plate 12 as far as the vicinities of the side portions of the first table plate 12 in the direction orthogonal to the direction in which the first table plate 12 reciprocally moves-that is, in the Z-axis direction (see FIG. 4 and FIG. 8). The communication-use oil paths 50a are disposed in accordance with the number of the hydrostatic pads 40 in the X-axis direction.

Additionally, either one end sides of the communication-use oil paths 50a open to the outer surface of the first table plate 12 and can be connected to the external hydraulic device 205 (see FIG. 8).

Here, the configuration of the hydraulic device 205 in the embodiment of the present invention will be described with reference to FIG. 8.

First, ordinarily, different oils are used for oil for hydrostatic pressure, oil for cooling during grinding and oil for grindstone spindle cooling, but in the embodiment of the present invention, by raising the precision of filtration, one oil can double as oil for hydrostatic pressure, oil for cooling during grinding work and oil for grindstone spindle cooling, and hydrostatic-cum-cooling-use oil 62 that serves as a hydrostatic-cum-cooling fluid that doubles as fluid for hydrostatic pressure and fluid for cooling is stored in a tank 61.

It will be noted that, although cooling oil such as cutting oil or spindle oil is used as the hydrostatic-cum-cooling-use oil 62, a fluid other than oil, such as cooling water, for example, may also be used as the hydrostatic-cum-cooling fluid.

In the hydraulic device 205, there is disposed a motor-powered hydraulic pump 63 that sucks and pressurizes the hydrostatic-cum-cooling-use oil 62 that serves as this hydrostatic-cum-cooling fluid, and the hydrostatic-cum-cooling-use oil 62 that has been pressurized is temporarily accumulated in an accumulator 65 via a check valve 64. Additionally, the hydrostatic-cum-cooling-use oil 62 is supplied from this accumulator 65 to the communication-use oil paths 50a via a filter 66.

It will be noted that a relief valve 67 is connected between the check valve 64 and the accumulator 65, so that when the pressure at this place exceeds a predetermined pressure such as 2 MPa, for example, the hydrostatic-cum-cooling-use oil 62 can be returned to the tank 61. Further, a pressure gauge 68 is also connected to the place where the relief valve 67 is connected, so that the pressure at this place can be checked from the outside.

Returning again to the description of the oil path 50, the communication-use oil paths 50a that configure the oil path 50 are formed as far as the vicinities of the side portions of the first table plate 12, and the communication-use oil paths 50a are bent at these portions so as to become orthogonal toward the undersurface side of the first table plate 12 and become vertical communication paths 50b that open to the undersurface of the first table plate 12 (see FIG. 4 and FIG. 8).

Additionally, in the first and second movable guide members 32a and 32b, guide member vertical communication paths 50c are formed in the vertical direction (the vertical direction of the page in FIG. 4) such that they are communicated with the vertical communication paths 50b, and the guide member vertical communication paths 50c are formed as far as the vicinities of the surfaces of the first and second movable guide members 32a and 32b on the opposite sides of the surfaces of the first and second movable guide members 32a and 32b that are joined to the first table plate 12 (see FIG. 4 and FIG. 8).

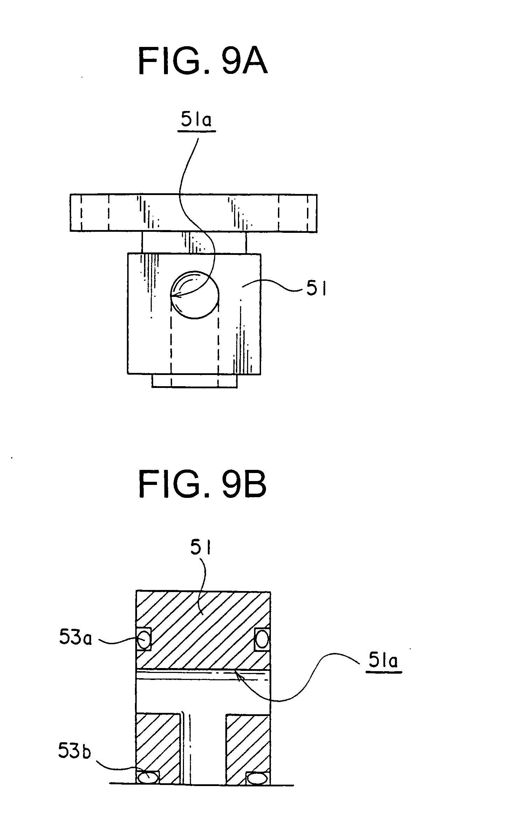

In the embodiment of the present invention, in portions leading from the portions where the communication-use oil paths 50a and the vertical communication paths 50b intersect to the undersurface side of the first table plate 12 to which the vertical communication paths 50b open, there are used distribution plugs 51 that have T-shaped passages 51a formed inside (see FIG. 4 and FIG. 9).

These distribution plugs 51 are disposed so as to fill insertion holes 52 that have been bored from the upper surface side of the first table plate 12-that is, from the surface on the side on which the second slide portion 102 is placed-to the communication-use oil paths 50a in order to insert the distribution plugs 51 (see FIG. 4). It will be noted that, in order to maintain air-tightness, first O-rings 53a are disposed in appropriate positions on the upper surface side of the first table plate 12 and second O-rings 53b are disposed in the vicinities of the end portions facing the undersurface side of the first table plate 12 (see FIG. 9(B)).

In the first and second movable guide members 32a and 32b, there are formed recess communication paths 50d that are orthogonal with respect to the second vertical communication paths 50c and are communicated with the recesses 41 (see FIG. 4 and FIG. 8).

In the embodiment of the present invention, orifice members 54 are disposed so as to fill these recess communication paths 50d (see FIG. 4).

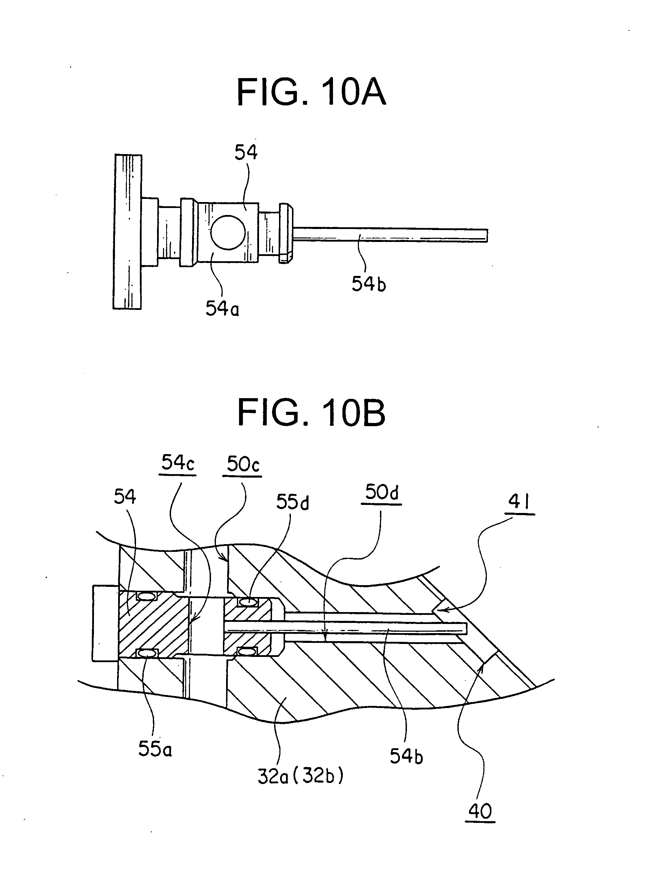

That is, the orifice members 54 in the embodiment of the present invention are broadly divided into and configured by base portions 54a whose overall exterior shapes are substantially circular column shapes and orifice tubes 54b that are disposed so as to extend from these base portions 54a (see FIG. 10).

In the base portions 54a, through paths 54c are formed in the direction orthogonal to the axial direction (the left-right direction of the page in FIG. 10) of the base portions 54a, and the through paths 54c are configured such that they can be communicated with the second vertical communication paths 50c formed inside the first and second movable members 32a and 32b when the orifice members 54 are disposed so as to be buried in the first and second movable members 32a and 32b (see FIG. 4).

Additionally, the orifice tubes 54b are orthogonal to and communicated with the through paths 54c and are disposed such that their distal end portions face the recesses 41 (see FIG. 10(B)). The orifice tubes 54b have sufficiently smaller diameters as compared to the through paths 54c so that fluctuations in the hydraulic pressure of the hydrostatic-cum-cooling-use oil 62 can be suppressed and the hydrostatic-cum-cooling-use oil 62 can be discharged to the recesses 41 at these portions.

That is, in a configuration where hydrostatic oil is supplied with respect to the plural hydrostatic pads 40 from one hydraulic source (the tank 61) as in the embodiment of the present invention, there is the fear that the interval will become larger for whatever reason in any of the hydrostatic pads 40 and, when this is left as is, the amount of the hydrostatic oil in that portion will become larger than the amount of the hydrostatic oil in the other hydrostatic pads 40 such that, in a worst case scenario, this leads to a state where supply of the hydrostatic oil to the other hydrostatic pads 40 is disrupted. Thus, by disposing the orifice tubes 54b in the middle of the supply paths of the hydrostatic oil leading to each hydrostatic pad 40, a situation where just the amount of oil of a particular hydrostatic pad 40 projects and becomes large is suppressed, so that hydrostatic compensation action is performed. It will be noted that, on the outer periphery of each of the base portions 54a, base portion-use O-rings 55a and 55d are annularly disposed in two places so as to sandwich the through path 54c (see FIG. 10(B)).

Further, in the embodiment of the present invention, in the recess communication paths 50d that are positioned on both end portions in the longitudinal direction of the first table plate 12-that is, in the X-axis direction-pressure gauge connection-use passages 50e that are orthogonal to and communicated with the recess communication paths 50d and open to the end surfaces of the first table plate 12 are formed in the middle of the recess communication paths 50d and particularly in appropriate positions of portions where the orifice tubes 54b pass, so that pressure gauges 56 disposed on the outside can be connected to the pressure gauge connection-use passages 50e (see FIG. 8). Additionally, the hydrostatic pressure of the recesses 41 can be checked by the pressure gauges 56. In the embodiment of the present invention, the hydrostatic pressure of the recesses 41 in these pressure gauges 56 is set to roughly about 1 MPa.

To describe the action of the hydrostatic pads 40 in the above-described configuration, first, in accompaniment with the start of grinding work, the hydraulic device 205 is also started by the control of the control panel 203, and pressure-feeding of the hydrostatic-cum-cooling oil 62 is started by the motor-powered hydraulic pump 63.

The hydrostatic-cum-cooling oil 62 that has been pressure-fed from the motor-powered hydraulic pump 63 flows into the communication-use oil paths 50a of the first and second table plates 12 and 15 and then flows out to the recesses 41 via the vertical communication paths 50b, the second vertical communication paths 50c and the recess communication paths 50d. At this time, in the recess communication paths 50d, the hydrostatic-cum-cooling oil 62 passes through the orifices resulting from the orifice tubes 54b, whereby the hydraulic pressure of the hydrostatic-cum-cooling oil 62 rises and flows out to the recesses 41.

Because the hydrostatic-cum-cooling oil 62 is released to the recesses 41 at an extremely high hydraulic pressure in this manner, hydrostatic pressure acts between the first reference guide member 31a and the first movable guide member 32a and between the second reference guide member 31a and the second movable guide member 32a and is held in minute intervals.

Thus, smooth movement is ensured in the reciprocal movement of the first table plate 12 and in the reciprocal movement of the second table plate 15.

It will be noted that, in the embodiment of the present invention, the orifice members 54 can be attached to and detached from the first and second movable guide members 32a and 32b in the horizontal direction, so when assembly of the entire grinding device is finished and the pressure (hydrostatic pressure) in the recesses 41 is actually measured and the hydrostatic pressure of each is uneven, the corresponding orifice member 54 can be replaced with one where the inner diameter of the orifice tube 54b is different, to thereby obtain the desired hydrostatic pressure.

Next, the work of grinding a workpiece with the grinding device S in the embodiment of the present invention will be described generally with reference to FIG. 1 to FIG. 3.

First, in the grinding device S in the embodiment of the present invention, attachment and detachment of the workpiece (not shown) can be performed by opening and closing the front door 201a of the body section 201 (see FIG. 1). That is, in the embodiment of the present invention, the bed 1 is placed such that particularly the step portion 1c of the bed 1 on which the first to third grindstone spindles 21 to 23 are disposed is positioned on the front door 201a side of the body section 201 (see FIG. 1 to FIG. 3), and for that reason, the work of replacing the grindstones 24 to 26 and the like can be performed in the left-right direction of the worker standing in front of the body section 201. Further, even the work of attaching the workpiece (not shown) and the like can be performed from the front door 201a in the same manner as the case of the grindstones 24 to 26 because the workpiece holding portion 103 can be moved as far as the vicinity of the first to third grindstone spindles 21 to 23 by operating the first and second slide portions 101 and 102.

In this manner, in the grinding device S in the embodiment of the present invention, unlike conventionally, it is not necessary for the worker to go around to the back side of the body section 201 to perform work such as grindstone replacement and the like, and workability is extremely excellent.

Additionally, as for machining and dressing an inner diameter of a workpiece (not shown), cutting is performed by moving the workpiece in the X-axis direction with the first slide portion 101 while reciprocally moving the workpiece in the Z-axis direction with the second slide portion 102.

Further, as for machining and dressing a seat, reciprocal motion is performed while forming an arbitrary angle by an interpolation function of movement in the X-axis direction of the first slide portion 101 and movement in the Z-axis direction of the second slide portion 102. Cutting at that time is performed by the second slide portion 102.

Moreover, as for machining and dressing an end surface, opposite of machining of an inner diameter, cutting is performed by moving the workpiece in the Z-axis direction with the second slide portion 102 while reciprocally moving the workpiece in the X-axis direction with the first slide portion 101.

In regard to the reciprocal motion of machining and dressing an end surface of an inner diameter, a minute arbitrary angle can also be formed by an interpolation function of the first slide portion 101 and the second slide portion 102.

Linear motion is basic for machining and dressing of an inner diameter, a seat and an end surface, but circular motion can also be done by causing an interpolation function in the Z-axis direction of the first slide portion 101 and the second slide portion 102 as needed.

The grinding device S in the embodiment of the present invention is one where the affect of heat with respect to machining precision is extremely smaller than conventionally.

That is, representative examples of heat sources that affect workpiece machining precision include motors (not shown) used in the first to third grindstone spindles 21 to 23.

Conventionally, spindles have a configuration where, unlike the first to third grindstone spindles 21 to 23 in the embodiment of the present invention, they are disposed on respectively separate slide mechanisms, and for that reason, they are relatively dispersed and placed. The motors used in the spindles are heat sources and are one of the factors affecting workpiece machining precision. Having such heat sources dispersed and placed around the workpiece leads to straining of members resulting from heat at numerous places, leads to a deterioration in workpiece machining precision, and is intrinsically not preferable.

In contrast, the first to third grindstone spindles 21 to 23 in the embodiment of the present invention are disposed extremely close to each other on the one place of the step portion 1c of the bed 1, and when seen as compared to conventionally, the state is equivalent to the heat sources being concentrated substantially in one place. Moreover, the bed 1 uses low thermal expansion cast metal, so the affect on workpiece machining precision of heat emitted from the motors (not shown) used in the first to third grindstone spindles 21 to 23 is, in combination with the reduction in the size of the bed 1, extremely smaller than conventionally.

Moreover, the placement of the first to third grindstone spindles 21 to 23 and the placement of the first and second slide portions 101 and 102 on the bed 1 are bilaterally symmetrical placements assuming a centerline that passes through the center of the bed 1 in the vertical direction of the page in FIG. 3, for example, so unlike conventionally, it is difficult for torsion or the like to occur because even if the bed 1 were to expand due to heat, that expansion would appear uniformly.

Further, in the embodiment of the present invention, the hydrostatic bearings are formed in the respective slanting surfaces of the respective chevron portions 36 of the first and second reference guide members 31a and 31b-that is, in a total of four surfaces-so the first table plate 12 and the first and second reference guide members 31a and 31b can be supported such that they are capable of reciprocal movement, the number of surfaces forming the hydrostatic bearings is smaller than conventionally, and the structure can be simplified in accompaniment therewith.

Further, because the grinding device has the configuration described above, the grinding device is made more compact and lightweight than conventionally, and therefore the magnitude of hydrostatic pressure is significantly smaller than conventionally.

Moreover, in the embodiment of the present invention, unlike conventionally, the grinding device is given a configuration where the orifice tubes 54b are disposed per each of the hydrostatic pads 40, whereby the diameters of the orifice tubes 54b can be determined individually and therefore the hydrostatic pressure of each hydrostatic pad 40 can easily be made constant, the first table plate 12 (or the second table plate 15) and the first and second reference guide members 31a and 31b can be stably reciprocally moved with good balance, and sufficient rigidity for the hydrostatic bearings is ensured.

The present invention is configured such that by fixing grindstones in one place, the work of changing workpieces and attaching and detaching the grindstones can be performed from that portion, and an even greater size reduction in a grinding device than conventionally can be realized, so the present invention is suitable for a grinding device particularly where a narrow installation space is demanded.

## Claims

1. A grinding device configured to be capable of grinding the inner diameter of a workpiece, grinding a seat and grinding an end surface, the grinding device comprising:
a mount portion that has a horizontal surface;
workpiece holding and rotating means that holds and rotates the workpiece such that the workpiece may be freely attached thereto and detached therefrom;
workpiece moving means that is disposed on the mount portion and holds the workpiece holding and rotating means such that the workpiece holding and rotating means may be freely moved; and
grindstone holding means that is fixedly disposed in an appropriate position on the mount portion with respect to the workpiece moving means and rotatably holds a grindstone,
wherein
the portion of the mount portion where the grindstone holding means is disposed is placed on a front side of the grinding device to enable work by a worker with respect to the workpiece and the grindstone, and
grinding of the workpiece by the grindstone held in the grindstone holding means is enabled by the moving of the workpiece by the workpiece moving means.

2. The grinding device according to claim 1, wherein
the workpiece moving means comprises
first slide means that is disposed on the horizontal surface of the mount portion and is configured to be reciprocally movable on a straight line in a horizontal direction and
second slide means that is placed on the first slide means and is configured to be reciprocally movable on a straight line in a horizontal direction orthogonal to the direction in which the first slide means reciprocally moves,
the first and second slide means are both configured such that a table member supported by hydrostatic bearings is disposed so as to be movable in a straight line facing a base member having a horizontal surface,
a guide portion that guides the table member on a straight line in a horizontal direction and a linear motor that reciprocally moves the table are disposed between the base member and the table member, and
the guide portion has a reference guide member that is disposed on the horizontal surface of the base member and a movable guide member that is disposed on the table member so as to face the reference guide member, hydrostatic pads are formed between the reference guide member and the movable guide member, a predetermined interval is held between the reference guide member and the movable guide member by hydrostatic fluid discharged from the hydrostatic pads, and hydrostatic bearings are formed.

3. The grinding device according to claim 2, wherein
two of the reference guide members are disposed an appropriate interval apart from each other in a direction orthogonal to the direction in which the table member reciprocally moves, each of the reference guide members has a chevron portion formed in a chevron shape facing the outside of the base member, two of the movable guide members are disposed in correspondence to the two reference guide members, each of the movable guide members has formed therein a groove portion into which the chevron portions loosely fit, and
the hydrostatic pads have recesses formed in slanting surfaces of the groove portions.

4. The grinding device according to claim 3, wherein inside the table member, there is formed an oil path that has openings in bottom portions of the recesses of the hydrostatic pads, has an external connection-use opening that is formed in an appropriate portion in the table member to enable connection to the outside, and enables injection of the hydrostatic fluid from the external connection-use opening.

5. The grinding device according to claim 4, wherein the fluid injected into the oil path doubles as fluid for hydrostatic pressure, fluid for cooling during grinding work and fluid for grindstone spindle cooling.
